(19) Europäisches Patentamt
European Patent Office
Office européen des brevets

(11) **EP 2 995 803 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(51) Int Cl.:
*F02D 41/14* (2006.01)          *F02D 19/02* (2006.01)
*F02D 41/00* (2006.01)          *F02M 26/05* (2016.01)
*F02M 26/47* (2016.01)

(21) Anmeldenummer: **15001345.6**

(22) Anmeldetag: **06.05.2015**

(54) **GASMOTOR FÜR EIN FAHRZEUG**

GAS ENGINE FOR A VEHICLE

MOTEUR À GAZ POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2014 DE 102014013284**

(43) Veröffentlichungstag der Anmeldung:
**16.03.2016 Patentblatt 2016/11**

(73) Patentinhaber: **MAN Truck & Bus SE**
**80995 München (DE)**

(72) Erfinder:
• **Barciela, Bruno**
**90489 Nürnberg (DE)**
• **Weiß, Joachim**
**90522 Oberasbach (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**WO-A1-01/59536          WO-A1-2013/175779**
**WO-A1-2014/010361      FR-A1- 2 892 150**
**US-A1- 2007 227 139    US-A1- 2009 076 713**

EP 2 995 803 B1

**Beschreibung**

Die Erfindung betrifft einen Gasmotor für ein Fahrzeug, insbesondere für ein Nutzfahrzeug, nach dem Oberbegriff des Patentanspruches 1, ein Verfahren zum Betreiben eines Gasmotors nach dem Oberbegriff des Patentanspruches 8 sowie ein Fahrzeug, insbesondere ein Nutzfahrzeug, nach Patentanspruch 12.

Zur Erfüllung einzuhaltender Abgasvorschriften ist es bekannt, Gasmotoren bzw. Brenngasmotoren, wie beispielsweise Erdgas-Motoren, von einer Magermix-Betriebsweise auf eine stöchiometrische Betriebsweise umzustellen. Um den sich daraus ergebenden Wirkungsgrad-Verlust des Gasmotors auszugleichen bzw. um den Wirkungsgrad des Gasmotors zu erhöhen, eignet sich beispielsweise eine gekühlte und geregelte Abgasrückführung (AGR), mittels der ein Teil eines Abgases des Gasmotors dem Gasmotor wieder zugeführt wird. Das rückgeführte Abgas wirkt bei der anschließenden Verbrennung in einer Zylinder-Kolben-Einheit des Gasmotors im Wesentlichen als Inertgas.

Bei Gasmotoren ohne AGR und mit einer Zuführung des Brenngases in einen Ansaugtrakt des Gasmotors wird ein der Zylinder-Kolben-Einheit zugeführter Ladegemisch-Massenstrom üblicherweise mittels eines an einem Steuergerät ausgeführten Liefergradmodells berechnet, welches das Schluckvermögen des Motors in Abhängigkeit der Drehzahl widerspiegelt. Hierzu wird zunächst der Ladegemisch-Druck (Manifold Absolute Pressure oder MAP) und die Ladegemisch-Temperatur im Ansaugtrakt im Bereich der Zylinder-Kolben-Einheit mittels eines Drucksensors und eines Temperatursensors gemessen. Aus dem gemessenen Ladegemisch-Druck, der Ladegemisch-Temperatur und der Drehzahl des Motors kann mittels des Liefergradmodells der zugeführte Ladegemisch-Massenstrom berechnet werden. Mittels des Verbrennungsluftverhältnisses kann dann auch ein der Zylinder-Kolben-Einheit zugeführter Luft-Massenstrom berechnet werden. Diese Vorgehensweise ist bei Gasmotoren mit AGR jedoch nicht möglich, da der Abgas-Anteil in dem zum Beispiel als Brenngas-Luft-Abgas-Gemisch ausgebildeten Ladegemisch nicht bekannt ist.

Zur Ermittlung des Luft-Massenstroms wird bei Gasmotoren mit AGR daher üblicherweise stromauf der AGR und stromauf der Brenngas-Zuführung mittels eines Luftmassenmessers, beispielsweise mittels eines Heißfilmluftmassenmessers, der Luft-Massenstrom in dem Ansaugtrakt gemessen. Mittels des gemessenen Luft-Massenstroms und des über das bereits erwähnte Liefergradmodell ermittelten Ladegemisch-Massenstroms kann dann auch der rückgeführte Abgas-Massenstrom ermittelt werden. Die Messung des Luft-Massenstroms mittels des Luftmassenmessers hat sich jedoch, insbesondere aufgrund dessen Schmutzempfindlichkeit, als sehr störanfällig erwiesen.

Aus der FR 2 892 150 A1 ist ein gattungsgemäßer Gasmotor für ein Fahrzeug bekannt. Aus der US 2007/227139 A1, aus der WO 2013/175779 A1, US20090076713A1 und aus der WO 2014/010361 A1 ist jeweils eine Brennkraftmaschine mit einer Abgasrückführung bekannt. Aus der WO 01/59536 A1 ist ein Verfahren zum Ermitteln eines Massenstroms über ein Steuerventil bekannt.

Es ist daher Aufgabe der Erfindung, einen Gasmotor für ein Fahrzeug, insbesondere für ein Nutzfahrzeug, sowie ein Verfahren zum Betreiben eines Gasmotors bereitzustellen, bei denen der der Verbrennungseinheit zugeführte Luft-Massenstrom und/oder der rückgeführte Abgas-Massenstrom auf alternative, zuverlässige und gleichzeitig kostengünstige Weise ermittelt werden.

Diese Aufgabe wird mit den Merkmalen der unabhängigen Ansprüche gelöst. Bevorzugte Weiterbildungen sind in den abhängigen Ansprüchen offenbart.

Die Erfindung betrifft einen Gasmotor für ein Fahrzeug, insbesondere für ein Nutzfahrzeug, mit einem Ansaugtrakt, mittels dem einer Verbrennungseinheit, insbesondere einer Zylinder-Kolben-Einheit, der Brennkraftmaschine ein Gas, insbesondere ein Brenngas-Luft-Abgas-Gasgemisch, zuführbar ist, und mit einer Abgasrückführung, mittels der dem der Verbrennungseinheit zugeführten Gas, insbesondere einem Brenngas-Luft-Gasgemisch, an einem Abgas-Zumischbereich ein Abgas der Verbrennungseinheit zuführbar ist, wobei im Ansaugtrakt stromauf der Verbrennungseinheit und stromab des Abgas-Zumischbereichs wenigstens eine Messeinrichtung angeordnet ist, mittels der der Gas-Massenstrom, insbesondere Brenngas-Luft-Abgas-Massenstrom, und die Gas-Temperatur, insbesondere Brenngas-Luft-Abgas-Temperatur, ermittelbar sind. Erfindungsgemäß ist, insbesondere zur Ermittlung des rückgeführten Abgas-Massenstroms und/oder eines der Verbrennungseinheit zugeführten Luft-Massenstroms, zusätzlich zur Messeinrichtung sowohl in der Abgasrückführung als auch im Ansaugtrakt jeweils stromauf des Abgas-Zumischbereichs wenigstens ein Temperatursensor angeordnet.

Auf diese Weise können der rückgeführte Abgas-Massenstrom und der der Verbrennungseinheit zugeführte Luft-Massenstrom besonders kostengünstig und zuverlässig ermittelt werden, da hierzu beispielsweise kein Luftmassenmesser zur Messung des Luft-Massenstroms vorzusehen ist. Stattdessen werden die deutlich zuverlässigeren und kostengünstigeren Temperatursensoren verwendet. Die Verwendung der Temperatursensoren ist zudem auch eine besonders einfache Alternative zu dem Luftmassenmesser, da die üblicherweise ohnehin bereits im Ansaugtrakt vorgesehene Messeinrichtung zur Ermittlung des rückgeführten Abgas-Massenstroms und des zugeführten Luft-Massenstroms verwendet wird.

Mit dem ermittelten, aktuell rückgeführten Abgas-Massenstrom und dem ermittelten, aktuell der Verbrennungseinheit zugeführten Luft-Massenstrom können dann beispielsweise der rückgeführte Abgas-Massenstrom und der Luft-Massenstrom mittels eines Motor-Steuergeräts in einem geschlossenen Regelkreis auf definierte Sollwerte eingeregelt werden. Diese Sollwerte können beispielsweise von der aktuellen Betriebsweise des Gasmotors und auch von weiteren Parametern abhängig sein.

Aus dem ermittelten rückgeführten Abgas-Massenstrom und dem ermittelten Luft-Massenstrom kann weiter beispielsweise auch die aktuelle Abgasrückführ-Rate berechnet werden.

Erfindungsgemäß ist ein Steuergerät vorgesehen, mittels dem aus den mittels der Messeinrichtung und der Temperatursensoren ermittelten Größen und aus dem fest voreingestellten und/oder mittels einer Lambdasonde gemessenen Verbrennungsluftverhältnis der rückgeführte Abgas-Massenstrom und/oder der der Verbrennungseinheit zugeführte Luft-Massenstrom berechnet werden kann bzw. können. Mittels eines derartigen Steuergeräts kann bzw. können aus den gemessenen Größen der rückgeführte Abgas-Massenstrom und/oder der Luft-Massenstrom einfach und automatisch bzw. selbsttätig berechnet werden.

Bevorzugt sind die Messeinrichtung und die Temperatursensoren in einem definierten Nahbereich, vorzugsweise in einem unmittelbaren Nahbereich, zu dem Abgas-Zumischbereich angeordnet, um die rückgeführte Abgasmenge und den Luftanteil des der Verbrennungseinheit zugeführten Gases mit einer besonders hohen Genauigkeit zu ermitteln.

Vorzugsweise weist die Messeinrichtung zur Ermittlung des Gas-Massenstroms, insbesondere Brenngas-Luft-Abgas-Massenstroms, einen im Ansaugtrakt angeordneten Drucksensor, insbesondere einen MAP-Sensor, auf, mittels dem der Gas-Druck, insbesondere Brenngas-Luft-Abgas-Druck, gemessen werden kann. Mittels eines Steuergeräts kann dann, insbesondere über ein Liefergradmodell, aus dem mittels des Drucksensors gemessenen Gas-Druck, insbesondere Brenngas-Luft-Abgas-Druck, der mittels der Messeinrichtung gemessenen Temperatur und der Drehzahl der Brennkraftmaschine der Gas-Massenstrom, insbesondere Brenngas-Luft-Abgas-Massenstrom, berechnet werden. Auf diese Weise kann der Gas-Massenstrom zuverlässig und gleichzeitig auch besonders kostengünstig ermittelt werden.

Bevorzugt kann die Messeinrichtung zur Messung der Temperatur einen Temperatursensor aufweisen, um die Temperatur auf einfache Weise und mit einer hohen Genauigkeit zu ermitteln.

Weiter bevorzugt ist der stromauf des Abgas-Zumischbereichs in der Abgasrückführung angeordnete Temperatursensor stromab einer Abgas-Kühleinrichtung der Abgasrückführung und/oder stromauf eines Rückschlagventils der Abgasrückführung angeordnet, um den rückgeführten Abgas-Massenstrom und den der Verbrennungseinheit zugeführten Luft-Massenstrom mit einer hohen Genauigkeit zu ermitteln.

Vorzugsweise ist zudem der stromauf des Abgas-Zumischbereichs im Ansaugtrakt angeordnete Temperatursensor stromab einer Brenngas-Luft-Mischeinrichtung und/oder einer Drosselklappe und/oder einer Ladeluft-Kühleinrichtung und/oder eines Verdichters eines Abgasturboladers des Ansaugtraktes angeordnet. Dadurch kann die Genauigkeit, mit der der rückgeführte Abgas-Massenstrom und der der Verbrennungseinheit zugeführte Luft-Massenstrom ermittelt werden, weiter erhöht werden.

Grundsätzlich ist festzuhalten, dass die Messeinrichtung und die Temperatursensoren bevorzugt derart anzuordnen sind, dass, während die Gase von den Temperatursensoren zu der Messeinrichtung strömen, die Änderung der Gasenergie und der Gasmasse möglichst gering ist. Dann können der rückgeführte Abgas-Massenstrom und der zugeführte Luft-Massenstrom mit einer hohen Genauigkeit ermittelt werden.

In einer weiteren bevorzugten Ausführung ist eine Messeinrichtung vorgesehen, mittels der der rückgeführte Abgas-Massenstrom und/oder der der Verbrennungseinheit zugeführte Luft-Massenstrom zusätzlich und/oder in Abhängigkeit von definierten Betriebszuständen des Gasmotors alternativ zu der bereits erläuterten Art ermittelt werden kann oder können. Dadurch kann beispielsweise eine Plausibilitätsprüfung bezüglich der ermittelten Werte durchgeführt werden. Ebenso ist es beispielsweise auch möglich, je nach Betriebsweise des Gasmotors den alternativ und/oder zusätzlich ermittelten Abgas-Massenstrom und/oder den alternativ und/oder zusätzlich ermittelten Luft-Massenstrom bei der Steuerung und/oder Regelung der Brennkraftmaschine zu verwenden oder nicht. So können beispielsweise je nach Betriebsweise des Gasmotors die zuverlässigeren oder genaueren Werte für die Regelung des Gasmotors verwendet werden. Konkret kann die alternative und/oder zusätzliche Ermittlung des rückgeführten Abgas-Massenstroms und/oder des der Verbrennungseinheit zugeführten Luft-Massenstroms dabei beispielsweise mittels eines auf einem Steuergerät ausgeführten Ladeluftkühlermodells und/oder mittels eines auf einem Steuergerät ausgeführten Drosselklappenmodells erfolgen.

Bei einem auf ein bestimmtes Bauteil bezogenes Modell, zum Beispiel dem vorstehend genannten Ladeluftkühlermodell oder dem vorstehend genannten Drosselklappenmodell, handelt es sich vorliegend stets um eine in einer Recheneinheit abgelegte, dieses Bauteil beschreibende mathematische Funktion und/oder Kennlinie bzw. Kennfelder, mit der bzw. denen eine Prozessgröße in Abhängigkeit von definiert vorgegebenen Eingangssignalen berechnet wird.

Zur Lösung der vorstehenden Aufgabe wird ferner ein Verfahren zum Betreiben eines Gasmotors für ein Fahrzeug, insbesondere für ein Nutzfahrzeug beansprucht, mit einem Ansaugtrakt, mittels dem einer Verbrennungseinheit, insbesondere einer Zylinder-Kolben-Einheit, des Gasmotors ein Gas, insbesondere ein Brenngas-Luft-Abgas-Gasgemisch, zugeführt wird, und mit einer Abgasrückführung, mittels der dem der Verbrennungseinheit zugeführten Gas an einem Abgas-Zumischbereich ein Abgas der Verbrennungseinheit zugeführt wird. Erfindungsgemäß werden mittels einer Mess- und Steuereinrichtung aus dem Gas-Massenstrom, insbesondere Brenngas-Luft-Abgas-Massenstrom, und der Gas-Temperatur, insbesondere Brenngas-Luft-Abgas-Temperatur, im Ansaugtrakt stromauf der Verbrennungseinheit und stromab des Abgas-Zumischbereichs, aus der Abgas-Temperatur in der Abgasrückführung stromauf des Abgas-Zumischbereichs und aus der Gas-Temperatur, insbesondere Brenngas-Luft-Temperatur, im Ansaugtrakt stromauf des Abgas-Zumischbereichs ein rückgeführter Abgas-Massenstrom und/oder ein der Verbrennungseinheit zugeführter Luft-Massenstrom ermittelt.

Wie bereits erläutert, können der rückgeführte Abgas-Massenstrom und der der Verbrennungseinheit zugeführte Luft-Massenstrom dadurch besonders kostengünstig und zuverlässig ermittelt werden.

Erfindungsgemäß werden bei der Berechnung eine Massenstrombilanz und eine Energiebilanz, insbesondere in einem definierten und/oder unmittelbaren Nahbereich, im Bereich des Abgas-Zumischbereichs durchgeführt, wobei bei der Massenstrombilanz und bei der Energiebilanz der Abgas-Massenstrom der Abgasrückführung, der Gas-Massenstrom, insbesondere Brenngas-Luft-Massenstrom, im Ansaugtrakt stromauf des Abgas-Zumischbereichs und der Gas-Massenstrom, insbesondere Brenngas-Luft-Abgas-Massenstrom, im Ansaugtrakt stromab des Abgas-Zumischbereichs und stromauf der Verbrennungseinheit berücksichtigt werden. Mit der Massenstrombilanz und der Energiebilanz im Bereich des Abgas-Zumischbereichs können der rückgeführte Abgas-Massenstrom und der der Verbrennungseinheit zugeführte Luft-Massenstrom auf einfache Weise mit den gemessenen Größen berechnet werden.

Konkret ist der Gas-Massenstrom im Ansaugtrakt stromauf des Abgas-Zumischbereichs bei dem Gasmotor ein Brenngas-Luft-Gemisch mit einem definierten Verbrennungsluftverhältnis. Dann wird bei der Berechnung der der Verbrennungseinheit zugeführte Brenngas-Massenstrom über das Verbrennungsluftverhältnis in Abhängigkeit von dem der Verbrennungseinheit zugeführten Luft-Massenstrom ausgedrückt, um den rückgeführten Abgas-Massenstrom und den der Verbrennungseinheit zugeführten Luft-Massenstrom auf einfache Weise zu berechnen.

Zur Ermittlung des Gas-Massenstroms, insbesondere Brenngas-Luft-Abgas-Massenstroms, stromauf der Verbrennungseinheit und stromab des Abgas-Zumischbereichs kann bevorzugt der Gasdruck, insbesondere Brenngas-Luft-Abgas-Druck, im Ansaugtrakt stromauf der Verbrennungseinheit und stromab des Abgas-Zumischbereichs gemessen werden, wobei mittels der Mess- und Steuereinrichtung, insbesondere über ein Liefergradmodell, aus dem gemessenen Gasdruck, insbesondere Brenngas-Luft-Abgas-Druck, der mittels der Mess- und Steuereinrichtung gemessenen Temperatur und der Drehzahl des Gasmotors der Gas-Massenstrom, insbesondere Brenngas-Luft-Abgas-Massenstrom, berechnet wird. Dadurch kann der Gas-Massenstrom, wie bereits erläutert, besonders kostengünstig und zuverlässig ermittelt werden.

Vorzugsweise ist zudem eine Messeinrichtung vorgesehen, mittels der der rückgeführte Abgas-Massenstrom und der der Verbrennungseinheit zugeführte Luft-Massenstrom zusätzlich und/oder in Abhängigkeit des Betriebs des Gasmotors auch alternativ ermittelt werden kann. Die sich hieraus ergebenden Vorteile wurden ebenfalls bereits erläutert. Konkret kann die alternative und/oder zusätzliche Ermittlung des rückgeführten Abgas-Massenstroms und des der Verbrennungseinheit zugeführten Luft-Massenstroms dabei beispielsweise über ein an einem Steuergerät ausgeführtes Ladeluftkühlermodell und/oder über ein an einem Steuergerät ausgeführtes Drosselklappenmodell erfolgen.

Besonders bevorzugt wird bei der Regelung und/oder Steuerung des rückgeführten Abgas-Massenstroms in Abhängigkeit von definierten Betriebszuständen der Brennkraftmaschine der alternativ und/oder zusätzlich ermittelte rückgeführte Abgas-Massenstrom verwendet oder nicht. Ebenso kann bei der Regelung und/oder Steuerung des der Verbrennungseinheit zugeführten Luft-Massenstroms in Abhängigkeit von definierten Betriebszuständen des Gasmotors der alternativ und/oder zusätzlich ermittelte zugeführte Luft-Massenstrom verwendet werden oder nicht. So kann die Regelung und/oder Steuerung der rückgeführten Abgasmenge und/oder des zugeführten Luft-Massenstroms in der bereits erläuterten Weise verbessert werden.

Ferner wird ein Fahrzeug, insbesondere ein Nutzfahrzeug, mit dem Gasmotor beansprucht. Die sich hieraus ergebenden Vorteile sind identisch mit den bereits gewürdigten Vorteilen der erfindungsgemäßen Brennkraftmaschine, so dass diese hier nicht wiederholt werden.

Die Erfindung und ihre vorteilhaften Aus- und/oder Weiterbildungen sowie deren Vorteile werden nachfolgend anhand einer Zeichnung lediglich beispielhaft näher erläutert.

Die einzige Figur zeigt eine schematische Darstellung einer beispielhaften Ausführungsform eines erfindungsgemäßen Gasmotors, der hier als Erdgasmotor 1 mit einer geregelten und gekühlten Abgasrückführung 2 ausgebildet ist.

Ein Luft-Massenstrom (Pfeil 3) wird einem Motorblock 10 über einen Ansaugtrakt 25 zugeführt, wobei der Luft-Massenstrom 3 hierbei zuerst einen Verdichter 4, der Bestandteil eines Abgasturboladers 5 ist, und anschließend einen Ladeluftkühler 6 durchströmt. Von dort strömt der gekühlte Luft-Massenstrom 3 über eine steuerbare Drosselklappe 7 zu einem Gasmischer 8, dem weiter ein Erdgas-Massenstrom (Pfeil 9) zugeführt wird. Vom Gasmischer 8 ausgehend strömt das dort gebildete Erdgas-Luft-Gasgemisch 26 zu einer Zylinder-Kolben-Einheit 11, in der der Verbrennungsprozess stattfindet. Anschließend strömt ein Abgas-Massenstrom (Pfeil 12) über eine Turbine 13 des Abgasturboladers 5, wobei die Turbine 13 mechanisch mit dem Verdichter 4 gekoppelt ist und diesen antreibt.

Stromauf der Turbine 13 wird, gesteuert über ein AGR-Regelventil 15 an einer Abzweigstelle 17 ein Teil des Abgas-Massenstroms als AGR-Massenstrom 14 abgezweigt. Dieser AGR-Massenstrom 14 strömt in der Abgasrückführung 2 über das AGR-Regelventil 15, einen AGR-Kühler 16 und ein Rückschlagventil, hier beispielhaft ein Flatterventil 33, zu einem Abgas-Zumischbereich 18, der stromab des Gasmischers 8 sowie stromauf des Motorblocks 10 in dem Ansaugtrakt angeordnet ist, so dass der AGR-Massenstrom 14 dem Erdgas-Luft-Gasgemisch 26 beigemischt wird. Durch die Zuführung des Erdgases in den Ansaugtrakt 25 wird das Luft-Erdgas-Abgas-Gemisch hier außerhalb Zylinder-Kolben-Einheit 11 gebildet, so dass hier eine äußere Gemischbildung vorliegt. Alternativ kann das Erdgas auch der Zylinder-Kolben-Einheit 11 zugeführt bzw. in die Brennräume der Zylinder-Kolben-Einheit 11 injiziert werden, so dass sich das Luft-Erdgas-Abgas-Gemisch erst in den Brennräumen der Zylinder-Kolben-Einheit 11 bildet. In diesem Fall liegt dann eine innere Gemischbildung vor.

Weiter ist im Ansaugtrakt 25 zwischen dem Motorblock 10 und dem Abgas-Zumischbereich 18 ein Drucksensor 22, bevorzugt ein MAP-Saugrohrdrucksensor, angeordnet, mittels dem der Ladegemisch-Druck gemessen wird. Zudem ist im Ansaugtrakt 25 zwischen dem Motorblock 10 und dem Abgas-Zumischbereich 18 auch ein Temperatursensor 27 angeordnet, mittels dem die Ladegemisch-Temperatur gemessen wird. Weiter ist im Ansaugtrakt 25 stromauf des Abgas-Zumischbereichs 18 und stromab des Gasmischers 8 ein Temperatursensor 31 angeordnet, mittels dem ebenfalls die Ladegemisch-Temperatur gemessen wird. Zudem ist in der Abgasrückführung 2 stromauf des Flatterventils 33 und stromab des AGR-Kühlers 16 auch ein Temperatursensor 29 angeordnet, mittels dem die Abgas-Temperatur gemessen wird.

Die eben beschriebenen Temperatursensoren 27, 29 und 31 sowie der Drucksensor 22 sind mit einem Steuergerät 21 signaltechnisch verbunden, so dass deren gemessene Größen an das Steuergerät 21 übermittelt werden. Mittels des Steuergeräts 21 kann ein Liefergradmodell ausgeführt werden, mit dem aus dem mittels des Drucksensors 22 gemessenen Ladegemisch-Druck und der mittels des Temperatursensors 27 gemessenen Ladegemisch-Temperatur der Ladegemisch-Massenstrom aus Frischluft, Brenngas und rückgeführtem Abgas bestimmt werden kann. Aus den mittels der Temperatursensoren 27, 29 und 31 gemessenen Temperaturen, dem berechneten Ladegemisch-Massenstrom und dem beispielsweise mittels einer Lambdasonde 24 gemessenen Verbrennungsluftverhältnis $\lambda$ des Luft-Erdgas-Gasgemischs können dann mittels des Steuergeräts 21 der AGR-Massenstrom 14 und der Luft-Massenstrom 3 berechnet werden. Konkret kann diese Berechnung beispielsweise mittels einer Massenstrombilanz und einer Energiebilanz in der mit gestrichelten Linien angedeuteten Systemgrenze 33 erfolgen. Hierzu können beispielhaft die folgenden Formeln verwendet werden:

$$\dot{m}_{Gesamt} = \dot{m}_{AGR} + \dot{m}_{Luft} + \dot{m}_{Brenngas}$$

$$(\dot{m}_{Luft} \times c_{p,Luft} \times T_{BL}) + (\dot{m}_{Brenngas} \times c_{p,Brenngas} \times T_{BL}) + (\dot{m}_{AGR} \times c_{p,AGR} \times T_{AGR}) = (\dot{m}_{Gesamt} \times c_{p,Gesamt} \times T_{Gesamt})$$

$$\lambda = \dot{m}_{Luft} / (L_{min} \times \dot{m}_{Brenngas})$$

Des Weiteren sind optional auch stromauf des Ladeluftkühlers 6 ein Drucksensor 19 und stromab des Ladeluftkühlers 6 ein Drucksensor 20 im Ansaugtrakt 25 angeordnet, mittels denen ein Druckverlust des Luft-Massenstroms 3 über den Ladeluftkühler 6 gemessen wird. Die Messsignale der Drucksensoren 19, 20 entsprechend einem Differenzdruck werden einem auf dem Steuergerät 21 ausgeführten Ladeluftkühlermodell zugeführt, mittels dem aus dem gemessenen Differenzdruck der durch den Ladeluftkühler 6 strömende Luft-Massenstrom 3 berechnet werden kann. Aus dem berechneten Luft-Massenstrom 3, dem mittels des Liefergradmodells berechneten Ladegemisch-Massenstrom und dem Verbrennungsluftverhältnis kann dann der ebenfalls AGR-Massenstrom 14 berechnet werden.

Die eben beschriebenen Drucksensoren 19, 20 und das Ladeluftkühlermodell ermöglichen eine alternative oder zusätzliche Ermittlung des Luft-Massenstroms 3 und des AGR-Massenstroms 14. So kann beispielsweise eine Plausibilitätsprüfung bezüglich der mittels der Sensoren 22, 27, 29 und 31 ermittelten Werte durchgeführt werden. Ebenso ist es beispielsweise auch möglich, je nach Betriebsweise des Erdgas-Motors 1 die alternativ oder zusätzlich ermittelten Werte oder die mittels der Sensoren 22, 27, 29 und 31 ermittelten Werte bei der Regelung des Luft-Massenstroms 3 und des AGR-Massenstroms 14 zu verwenden oder nicht. So können beispielsweise je nach Betriebsweise des Erdgas-Motors 1 die erfahrungsgemäß zuverlässigeren und/oder die genaueren Werte für diese Regelung verwendet werden.

Alternativ oder zusätzlich zur Ermittlung des Luft-Massenstroms 3 über das Ladeluftkühlermodell kann der Luft-Massenstrom 3 beispielsweise auch über ein auf dem Steuergerät 21 ausgeführtes Drosselklappenmodell ermittelt werden. Dieses Drosselklappenmodell weist als Eingangsgrößen den Druckverlust über der Drosselklappe 7 und die aktuelle Drosselklappenstellung auf. Die Messung des Druckverlusts über der Drosselklappe 7 kann dabei mittels des stromauf der Drosselklappe 7 angeordneten Drucksensors 20 und mittels eines in den Figuren nicht gezeigten, zwischen der Drosselklappe 7 und dem Gasmischer 8 im Ansaugtrakt 25 angeordneten Drucksensor erfolgen.

Bezugszeichenliste

| | |
|---|---|
| 1 | Erdgas-Motor |
| 2 | Abgasrückführung |
| 3 | Pfeil (Luft-Massenstrom) |
| 4 | Verdichter |
| 5 | Abgasturbolader |
| 6 | Ladeluftkühler |
| 7 | Drosselklappe |
| 8 | Gasmischer |
| 9 | Pfeil (Erdgas-Massenstrom) |
| 10 | Motorblock |
| 11 | Zylinder-Kolben-Einheit |
| 12 | Pfeil (Abgas-Massenstrom) |
| 13 | Turbine |
| 14 | AGR-Massenstrom |
| 15 | AGR-Regelventil |
| 16 | AGR-Kühler |
| 17 | Verzweigungsstelle |
| 18 | Abgas-Einleitbereich |
| 19 | Drucksensor |
| 20 | Drucksensor |
| 21 | Recheneinheit |
| 22 | Drucksensor |
| 24 | Lambdasonde |
| 25 | Ansaugtrakt |
| 26 | Erdgas-Luft-Gasgemisch |
| 27 | Temperatursensor |
| 29 | Temperatursensor |
| 31 | Temperatursensor |
| 33 | Flatterventil |
| $C_{p,AGR}$ | spezifische Wärmekapazität Abgas |
| $C_{p,Brenngas}$ | spezifische Wärmekapazität Brenngas |
| $C_{p,Gesamt}$ | spezifische Wärmekapazität Ladegemisch |
| $C_{p,Luft}$ | spezifische Wärmekapazität Luft |
| $L_{min}$ | Mindestluftbedarf |
| $\dot{m}_{AGR}$ | AGR-Massenstrom |
| $\dot{m}_{Brenngas}$ | Brenngas-Massenstrom |
| $\dot{m}_{Gesamt}$ | Ladegemisch-Massenstrom |
| $\dot{m}_{Luft}$ | Luft-Massenstrom |
| $T_{AGR}$ | Temperatur rückgeführtes Abgas |
| $T_{BL}$ | Temperatur Brenngas-Luft-Gasgemisch |
| $T_{Gesamt}$ | Temperatur Ladegemisch |
| $\lambda$ | Verbrennungsluftverhältnis |

**Patentansprüche**

1.  Gasmotor für ein Fahrzeug, mit einem Ansaugtrakt (25), mittels dem einer Verbrennungseinheit (11) des Gasmotors (1) ein Gas zuführbar ist, und mit einer Abgasrückführung (2), mittels der dem der Verbrennungseinheit (11) zugeführten Gas an einem Abgas-Zumischbereich (18) ein Abgas der Verbrennungseinheit (11) zuführbar ist, wobei im Ansaugtrakt (25) stromauf der Verbrennungseinheit (11) und stromab des Abgas-Zumischbereichs (18) wenigstens eine Messeinrichtung (22, 27) angeordnet ist, mittels der der Gas-Massenstrom und die Gas-Temperatur ermittelt sind, **dadurch gekennzeichnet,**
    **dass** zusätzlich zur Messeinrichtung (22, 27) sowohl in der Abgasrückführung (2) als auch im Ansaugtrakt (25) jeweils stromauf des Abgas-Zumischbereichs (18) wenigstens ein Temperatursensor (29, 31) angeordnet ist,

**dass** ein Steuergerät (21) vorgesehen ist, mittels dem aus den mittels der Messeinrichtung (22, 27) und den Temperatursensoren (29, 31) ermittelten Größen und aus dem fest voreingestellten und/oder mittels einer Lambdasonde (24) gemessenen Verbrennungsluftverhältnis (λ) der rückgeführte Abgas-Massenstrom (14) und der der Verbrennungseinheit (11) zugeführte Luft-Massenstrom (3) berechnet sind,

**dass** bei der Berechnung eine Massenstrombilanz und eine Energiebilanz im Bereich des Abgas-Zumischbereichs (18) durchgeführt werden, wobei bei der Massenstrombilanz und der Energiebilanz der Abgas-Massenstrom (14) der Abgasrückführung (2), der Gas-Massenstrom im Ansaugtrakt (25) stromauf des Abgas-Zumischbereichs (18) und der Gas-Massenstrom im Ansaugtrakt (25) stromab des Abgas-Zumischbereichs (18) und stromauf der Verbrennungseinheit (11) berücksichtigt werden, und

**dass** der Gas-Massenstrom im Ansaugtrakt (25) stromauf des Abgas-Zumischbereichs (18) ein Brenngas-Luft-Gemisch mit einem definierten Verbrennungsluftverhältnis (λ) ist, wobei vorgesehen ist, dass bei der Berechnung der zugeführte Brenngas-Massenstrom (9) über das Verbrennungsluftverhältnis (λ) in Abhängigkeit von dem zugeführten Luft-Massenstrom (3) ausgedrückt wird.

2. Gasmotor nach Anspruch 1, **dadurch gekennzeichnet, dass** die Messeinrichtung (22, 27) und die Temperatursensoren (29, 31) in einem definierten Nahbereich, vorzugsweise im unmittelbaren Nahbereich, zu dem Abgas-Zumischbereich (18) angeordnet sind.

3. Gasmotor nach einem der vorhergehenden Ansprüche, **dadurch gekennzeichnet, dass** die Messeinrichtung (22, 27) zur Ermittlung des Gas-Massenstroms, insbesondere Brenngas-Luft-Abgas-Massenstroms, wenigstens einen im Ansaugtrakt (25) angeordneten Drucksensor (22), insbesondere einen MAP-Sensor, aufweist, mittels dem der Gas-Druck, insbesondere Brenngas-Luft-Abgas-Druck, messbar ist, und dass ein Steuergerät (21) vorgesehen ist, mittels dem aus dem mittels des Drucksensors (22) gemessenen Gas-Druck, insbesondere Brenngas-Luft-Abgas-Druck, der mittels der Messeinrichtung (27) gemessenen Temperatur und der Drehzahl des Gasmotors (1) der Gas-Massenstrom, insbesondere Brenngas-Luft-Abgas-Massenstrom, berechenbar ist.

4. Gasmotor nach einem der vorhergehenden Ansprüche, **dadurch gekennzeichnet, dass** die Messeinrichtung (22, 27) zur Ermittlung der Temperatur wenigstens einen Temperatursensor (27) aufweist.

5. Gasmotor nach einem der vorhergehenden Ansprüche, **dadurch gekennzeichnet, dass** der stromauf des Abgas-Zumischbereichs (18) in der Abgasrückführung (2) angeordnete Temperatursensor (29) stromab einer Abgas-Kühleinrichtung (16) der Abgasrückführung (2) und/oder stromauf eines Rückschlagventils (33) der Abgasrückführung (2) angeordnet ist.

6. Gasmotor nach einem der vorhergehenden Ansprüche, **dadurch gekennzeichnet, dass** der stromauf des Abgas-Zumischbereichs (18) im Ansaugtrakt (25) angeordnete Temperatursensor (31) stromab einer Brenngas-Luft-Mischeinrichtung (8) und/oder einer Drosselklappe (7) und/oder einer Ladeluft-Kühleinrichtung (6) und/oder eines Verdichters (4) eines Abgasturboladers (5) des Ansaugtraktes (25) angeordnet ist.

7. Gasmotor nach einem der vorhergehenden Ansprüche, **dadurch gekennzeichnet, dass** eine Messeinrichtung (20, 19) vorgesehen ist, mittels der der rückgeführte Abgas-Massenstrom (14) und/oder der der Verbrennungseinheit (11) zugeführte Luft-Massenstrom (3) zusätzlich und/oder in Abhängigkeit von einem definierten Betriebszustand des Gasmotors (1) auch alternativ ermittelbar sind, wobei bevorzugt vorgesehen ist, dass die alternative und/oder zusätzliche Ermittlung des rückgeführten Abgas-Massenstroms (14) und/oder des zugeführten Luft-Massenstroms (3) mittels eines an einem Steuergerät (21) ausgeführten Ladeluftkühlermodells und/oder eines an einem Steuergerät (21) ausgeführten Drosselklappenmodells erfolgt.

8. Verfahren zum Betreiben eines Gasmotors nach einem der Ansprüche 1 bis 7 für ein Fahrzeug, wobei der Gasmotor (1) einen Ansaugtrakt (25) aufweist, mittels dem einer Verbrennungseinheit (11) des Gasmotors (1) ein Gas zuführbar ist, wobei der Gasmotor (1) eine Abgasrückführung (2) aufweist, mittels der dem der Verbrennungseinheit (11) zugeführten Gas an einem Abgas-Zumischbereich (18) ein Abgas der Verbrennungseinheit (11) zuführbar ist, wobei im Ansaugtrakt (25) stromauf der Verbrennungseinheit (11) und stromab des Abgas-Zumischbereichs (18) wenigstens eine Messeinrichtung (22, 27) angeordnet ist, mittels der der Gas-Massenstrom und die Gas-Temperatur ermittelt sind, **dadurch gekennzeichnet,**

**dass** zusätzlich zur Messeinrichtung (22, 27) sowohl in der Abgasrückführung (2) als auch im Ansaugtrakt (25) jeweils stromauf des Abgas-Zumischbereichs (18) wenigstens ein Temperatursensor (29, 31) angeordnet ist, **dass** ein Steuergerät (21) vorgesehen ist, mittels dem aus den mittels der Messeinrichtung (22, 27) und den Temperatursensoren (29, 31) ermittelten Größen und aus dem fest voreingestellten und/oder mittels einer Lambdasonde (24) gemessenen Verbrennungsluftverhältnis (λ) der rückgeführte Abgas-Massenstrom (14) und der der Verbrennungseinheit (11) zugeführte Luft-Massenstrom (3) berechnet sind, und

**dass** bei der Berechnung eine Massenstrombilanz und eine Energiebilanz im Bereich des Abgas-Zumischbereichs (18) durchgeführt werden, wobei bei der Massenstrombilanz und der Energiebilanz der Abgas-Massenstrom (14) der Abgasrückführung (2), der Gas-Massenstrom im Ansaugtrakt (25) stromauf des Abgas-Zumischbereichs (18) und der Gas-Massenstrom im Ansaugtrakt (25) stromab des Abgas-Zumischbereichs (18) und stromauf der Verbrennungseinheit (11) berücksichtigt werden, und

**dass** der Gas-Massenstrom im Ansaugtrakt (25) stromauf des Abgas-Zumischbereichs (18) ein Brenngas-Luft-Gemisch mit einem definierten Verbrennungsluftverhältnis (λ) ist, wobei vorgesehen ist, dass bei der Berechnung der zugeführte Brenngas-Massenstrom (9) über das Verbrennungsluftverhältnis (λ) in Abhängigkeit von dem zugeführten Luft-Massenstrom (3) ausgedrückt wird.

9. Verfahren nach Anspruch 8, **dadurch gekennzeichnet, dass** zur Ermittlung des Gas-Massenstroms, insbesondere Brenngas-Luft-Abgas-Massenstroms, stromauf der Verbrennungseinheit (11) und stromab des Abgas-Zumischbereichs (18) der Gas-Druck, insbesondere Brenngas-Luft-Abgas-Druck, im Ansaugtrakt (25) stromauf der Verbrennungseinheit (11) und stromab des Abgas-Zumischbereichs (18) gemessen wird, wobei mittels der Mess- und Steuereinrichtung (21, 22, 27, 29, 31) aus dem gemessenen Gas-Druck, insbesondere Brenngas-Luft-Abgas-Druck, der mittels der Mess- und Steuereinrichtung (21, 27, 29, 31) gemessenen Temperatur und der Drehzahl des Gasmotors (1) der Gas-Massenstrom, insbesondere Brenngas-Luft-Abgas-Massenstrom, berechnet wird.

10. Verfahren nach einem der Ansprüche 8 oder 9, **dadurch gekennzeichnet, dass** eine Messeinrichtung (20, 19) vorgesehen ist, mittels der der rückgeführte Abgas-Massenstrom (14) und/oder der der Verbrennungseinheit (11) zugeführte Luft-Massenstrom (3) zusätzlich und/oder in Abhängigkeit des Betriebs des Gasmotors (1) alternativ ermittelt werden, wobei bevorzugt vorgesehen ist, dass die alternative und/oder zusätzliche Ermittlung des rückgeführten Abgas-Massenstroms (14) und/oder des zugeführten Luft-Massenstroms (3) mittels eines auf einem Steuergerät (21) ausgeführten Ladeluftkühlermodells und/oder eines auf einem Steuergerät (21) ausgeführten Drosselklappenmodells erfolgt.

11. Verfahren nach Anspruch 10, **dadurch gekennzeichnet, dass** bei der Regelung und/oder Steuerung des rückgeführten Abgas-Massenstroms (14) und/oder des der Verbrennungseinheit (11) zugeführten Luft-Massenstroms (3) in Abhängigkeit von definierten Betriebszuständen des Gasmotors (1) der alternativ und/oder zusätzlich ermittelte rückgeführte Abgas-Massenstrom (14) und/oder der alternativ und/oder zusätzlich ermittelte Luft-Massenstrom (3) verwendet werden oder nicht.

12. Fahrzeug, insbesondere Nutzfahrzeug, mit einem Gasmotor nach einem der Ansprüche 1 bis 7 und/oder zur Durchführung eines Verfahrens nach einem der Ansprüche 8 bis 11.

**Claims**

1. Gas engine for a vehicle, having an intake tract (25) by means of which a gas can be fed to a combustion unit (11) of the gas engine (1), and having an exhaust-gas recirculation arrangement (2) by means of which an exhaust gas of the combustion unit (11) can be fed, at an exhaust-gas admixing region (18), to the gas that is fed to the combustion unit (11), wherein, in the intake tract (25) upstream of the combustion unit (11) and downstream of the exhaust-gas admixing region (18), there is arranged at least one measuring device (22, 27) by means of which the gas mass flow and the gas temperature are determined, **characterized**

**in that** at least one temperature sensor (29, 31) is arranged in addition to the measuring device (22, 27) both in the exhaust-gas recirculation arrangement (2) and in the intake tract (25), in each case upstream of the exhaust-gas admixing region (18),

**in that** a control unit (21) is provided by means of which the recirculated exhaust-gas mass flow (14) and the air mass flow (3) fed to the combustion unit (11) are calculated from the variables determined by means of the measuring device (22, 27) and the temperature sensors (29, 31) and from the combustion air ratio (λ), which is invariantly preset and/or measured by means of a lambda probe (24),

**in that**, in the calculation, a mass flow balance and an energy balance in the region of the exhaust-gas admixing region (18) are performed, wherein the exhaust-gas mass flow (14) of the exhaust-gas recirculation arrangement (2), the gas mass flow in the intake tract (25) upstream of the exhaust-gas admixing region (18) and the gas mass flow in the intake tract (25) downstream of the exhaust-gas admixing region (18) and upstream of the combustion unit (11) are taken into consideration in the mass flow balance and the energy balance, and

**in that** the gas mass flow in the intake tract (25) upstream of the exhaust-gas admixing region (18) is a combustion gas-air mixture with a defined combustion air ratio (λ), wherein it is provided that, in the calculation, the fed combustion gas mass flow (9) is expressed by means of a combustion air ratio (λ) in a manner dependent on the fed air mass flow (3).

2. Gas engine according to Claim 1, **characterized in that** the measuring device (22, 27) and the temperature sensors (29, 31) are arranged in a defined vicinity, preferably in the immediate vicinity, of the exhaust-gas admixing region (18).

3. Gas engine according to any of the preceding claims, **characterized in that** the measuring device (22, 27) has, for the determination of the gas mass flow, in particular combustion gas-air-exhaust gas mass flow, at least one pressure sensor (22), in particular a MAP sensor, which is arranged in the intake tract (25) and by means of which the gas pressure, in particular combustion gas-air-exhaust gas pressure, can be measured, and **in that** a control unit (21) is provided by means of which the gas mass flow, in particular combustion gas-air-exhaust gas mass flow, can be calculated from the gas pressure, in particular combustion gas-air-exhaust gas pressure, measured by means of the pressure sensor (22), from the temperature measured by means of the measuring device (27), and from the rotational speed of the gas engine (1).

4. Gas engine according to any of the preceding claims, **characterized in that** the measuring device (22, 27) has at least one temperature sensor (27) for the determination of the temperature.

5. Gas engine according to any of the preceding claims, **characterized in that** the temperature sensor (29) arranged upstream of the exhaust-gas admixing region (18) in the exhaust-gas recirculation arrangement (2) is arranged downstream of an exhaust-gas cooling device (16) of the exhaust gas recirculation arrangement (2) and/or upstream of a check valve (33) of the exhaust-gas recirculation arrangement (2).

6. Gas engine according to any of the preceding claims, **characterized in that** the temperature sensor (31) arranged upstream of the exhaust-gas admixing region (18) in the intake tract (25) is arranged downstream of the combustion gas-air mixing device (8) and/or of a throttle flap (7) and/or of a charge-air cooling device (6) and/or of a compressor (4) of an exhaust-gas turbocharger (5) of the intake tract (25).

7. Gas engine according to any of the preceding claims, **characterized in that** a measuring device (20, 19) is provided by means of which the recirculated exhaust gas mass flow (14) and/or the air mass flow (3) fed to the combustion unit (11) can be additionally, and/or, in a manner dependent on a defined operating state of the gas engine (1), also alternatively, determined, wherein it is preferably provided that the alternative and/or additional determination of the recirculated exhaust-gas mass flow (14) and/or of the fed air mass flow (3) is performed by means of a charge-air cooler model implemented on a control unit (21) and/or by means of a throttle flap model implemented on a control unit (21).

8. Method for operating a gas engine according to any of Claims 1 to 7 for a vehicle, wherein the gas engine (1) has an intake tract (25) by means of which a gas can be fed to a combustion unit (11) of the gas engine (1), wherein the gas engine (1) has an exhaust-gas recirculation arrangement (2) by means of which an exhaust gas of the combustion unit (11) can be fed, at an exhaust-gas admixing region (18), to the gas that is fed to the combustion unit (11), wherein, in the intake tract (25) upstream of the combustion unit (11) and downstream of the exhaust-gas admixing region (18), there is arranged at least one measuring device (22, 27) by means of which the gas mass flow and the gas temperature are determined, **characterized**
**in that** at least one temperature sensor (29, 31) is arranged in addition to the measuring device (22, 27) both in the exhaust-gas recirculation arrangement (2) and in the intake tract (25), in each case upstream of the exhaust-gas admixing region (18),
**in that** a control unit (21) is provided by means of which the recirculated exhaust-gas mass flow (14) and the air mass flow (3) fed to the combustion unit (11) are calculated from the variables determined by means of the measuring device (22, 27) and the temperature sensors (29, 31) and from the combustion air ratio (λ), which is invariantly preset and/or measured by means of a lambda probe (24),
**in that**, in the calculation, a mass flow balance and an energy balance in the region of the exhaust-gas admixing region (18) are performed, wherein the exhaust-gas mass flow (14) of the exhaust-gas recirculation arrangement (2), the gas mass flow in the intake tract (25) upstream of the exhaust-gas admixing region (18) and the gas mass flow in the intake tract (25) downstream of the exhaust-gas admixing region (18) and upstream of the combustion unit (11) are taken into consideration in the mass flow balance and the energy balance, and
**in that** the gas mass flow in the intake tract (25) upstream of the exhaust-gas admixing region (18) is a combustion gas-air mixture with a defined combustion air ratio ($\lambda$), wherein it is provided that, in the calculation, the fed combustion gas mass flow (9) is expressed by means of the combustion air ratio ($\lambda$) in a manner dependent on the fed air mass flow (3).

9. Method according to Claim 8, **characterized in that**, for the determination of the gas mass flow, in particular combustion gas-air-exhaust gas mass flow, upstream of the combustion unit (11) and downstream of the exhaust-gas admixing region (18), the gas pressure, in particular combustion gas-air-exhaust gas pressure, in the intake tract (25) upstream of the combustion unit (11) and downstream of the exhaust-gas admixing region (18) is measured, wherein the gas mass flow, in particular combustion gas-air-exhaust gas mass flow, is calculated by means of the measuring and control device (21, 22, 27, 29, 31) from the measured gas pressure, in particular combustion gas-air-exhaust gas pressure, from the temperature measured by means of the measuring and control device (21, 27, 29, 31), and from the rotational speed of the gas engine (1).

10. Method according to either of Claims 8 and 9, **characterized in that** a measuring device (20, 19) is provided by means of which the recirculated exhaust gas mass flow (14) and/or the air mass flow (3) fed to the combustion unit (11) can be additionally, and/or, in a manner dependent on the operating state of the gas engine (1), also alternatively, determined, wherein it is preferably provided that the alternative and/or additional determination of the recirculated exhaust-gas mass flow (14) and/or of the fed air mass flow (3) is performed by means of a charge-air cooler model implemented on a control unit (21) and/or by means of a throttle flap model implemented on a control unit (21).

11. Method according to Claim 10, **characterized in that**, in the closed-loop and/or open-loop control of the recirculated exhaust-gas mass flow (14) and/or of the air mass flow (3) fed to the combustion unit (11), the alternatively and/or additionally determined recirculated exhaust-gas mass flow (14) and/or the alternatively and/or additionally determined air mass flow (3) are used, or not used, in a manner dependent on defined operating states of the gas engine (1).

12. Vehicle, in particular utility vehicle, having a gas engine according to any of Claims 1 to 7 and/or for carrying out a method according to any of Claims 8 to 11.

**Revendications**

1. Moteur à gaz pour un véhicule, comprenant une tubulure d'admission (25) au moyen de laquelle un gaz peut être acheminé à une unité de combustion (11) du moteur à gaz (1), et comprenant un système de recirculation des gaz d'échappement (2) au moyen duquel un gaz d'échappement de l'unité de combustion (11) peut être acheminé au niveau d'une région de mélange de gaz d'échappement (18) au gaz acheminé à l'unité de combustion (11), au moins un dispositif de mesure (22, 27) étant disposé dans la tubulure d'admission (25) en amont de l'unité de combustion (11) et en aval de la région de mélange de gaz d'échappement (18), dispositif de mesure au moyen duquel le débit massique de gaz et la température de gaz sont déterminés, **caractérisé en ce qu'**en plus du dispositif de mesure (22, 27), au moins un capteur de température (29, 31) est disposé respectivement en amont de la région de mélange de gaz d'échappement (18) à la fois dans le système de recirculation des gaz d'échappement (2) et dans la tubulure d'admission (25),
en ce qu'un appareil de commande (21) est prévu, au moyen duquel le débit massique de gaz d'échappement recirculé (14) et le débit massique d'air (3) acheminé à l'unité de combustion (11) sont calculés à partir des grandeurs déterminées au moyen du dispositif de mesure (22, 27) et des capteurs de température (29, 31) et à partir du rapport d'air de combustion ($\lambda$) préréglé fixement et/ou mesuré au moyen d'une sonde lambda (24),
en ce que, lors du calcul, un bilan de débit massique et un bilan énergétique sont effectués dans la zone de la région de mélange de gaz d'échappement (18), le débit massique de gaz d'échappement (14) du système de recirculation de gaz d'échappement (2), le débit massique de gaz dans la tubulure d'admission (25) en amont de la région de mélange de gaz d'échappement (18) et le débit massique de gaz dans la tubulure d'admission (25) en aval de la région de mélange de gaz d'échappement (18) et en amont de l'unité de combustion (11) sont pris en compte lors du bilan de débit massique et du bilan énergétique, et
en ce que le débit massique de gaz dans la tubulure d'admission (25) en amont de la région de mélange de gaz d'échappement (18) est un mélange d'air et de gaz de combustion présentant un rapport d'air de combustion ($\lambda$) défini, et lors du calcul, le débit massique de gaz de combustion acheminé (9) étant de préférence exprimé par le biais du rapport d'air de combustion ($\lambda$) en fonction du débit massique d'air acheminé (3).

2. Moteur à gaz selon la revendication 1, **caractérisé en ce que** le dispositif de mesure (22, 27) et les capteurs de température (29, 31) sont disposés dans une région proche définie, de préférence dans la région proche immédiate, par rapport à la zone de mélange de gaz d'échappement (18).

3. Moteur à gaz selon l'une des revendications précédentes, **caractérisé en ce que** le dispositif de mesure (22, 27) comprend, pour la détermination du débit massique de gaz, en particulier du débit massique de gaz de combustion/air/gaz d'échappement, au moins un capteur de pression (22), en particulier un capteur de pression absolue de la tubulure d'admission (MAP), disposé dans la tubulure d'admission (25), capteur au moyen duquel la pression de gaz, en particulier la pression de gaz de combustion/air/gaz d'échappement, peut être mesurée, et **en ce qu'**un appareil de commande (21) est prévu, au moyen duquel, à partir de la pression de gaz mesurée au moyen du capteur de pression (22), en particulier à partir de la pression de gaz de combustion/air/gaz d'échappement, de la température mesurée au moyen du dispositif de mesure (27) et du régime du moteur à gaz (1), le débit massique de gaz, en particulier le débit massique de gaz de combustion/air/gaz d'échappement, peut être calculé.

4. Moteur à gaz selon l'une des revendications précédentes, **caractérisé en ce que** le dispositif de mesure (22, 27) comprend au moins un capteur de température (27) pour la détermination de la température.

5. Moteur à gaz selon l'une des revendications précédentes, **caractérisé en ce que** le capteur de température (29) disposé en amont de la région de mélange de gaz d'échappement (18) dans le système de recirculation des gaz d'échappement (2) est disposé en aval d'un dispositif de refroidissement de gaz d'échappement (16) du système de recirculation des gaz d'échappement (2) et/ou en amont d'une soupape anti-retour (33) du système de recirculation des gaz d'échappement (2).

6. Moteur à gaz selon l'une des revendications précédentes, **caractérisé en ce que** le capteur de température (31) disposé en amont de la région de mélange de gaz d'échappement (18) dans la tubulure d'admission (25) est disposé en aval d'un dispositif de mélange de gaz de combustion et d'air (8) et/ou d'un clapet d'étranglement (7) et/ou d'un dispositif de refroidissement d'air de suralimentation (6) et/ou d'un compresseur (4) d'un turbocompresseur à gaz d'échappement (5) de la tubulure d'admission (25).

7. Moteur à gaz selon l'une des revendications précédentes, **caractérisé en ce qu'**un dispositif de mesure (20, 19) est prévu, au moyen duquel le débit massique de gaz d'échappement recirculé (14) et/ou le débit massique d'air (3) acheminé à l'unité de combustion (11) peuvent être déterminés également alternativement en plus et/ou en fonction d'un état de fonctionnement défini du moteur à gaz (1), la détermination alternative et/ou supplémentaire du débit massique de gaz d'échappement recirculé (14) et/ou du débit massique d'air acheminé (3) s'effectuant de préférence au moyen d'un modèle de refroidisseur d'air de suralimentation réalisé au niveau d'un appareil de commande (21) et/ou d'un modèle de clapet d'étranglement réalisé au niveau d'un appareil de commande (21).

8. Procédé de fonctionnement d'un moteur à gaz selon l'une des revendications 1 à 7 pour un véhicule, dans lequel le moteur à gaz (1) comprend une tubulure d'admission (25) au moyen de laquelle un gaz peut être acheminé à une unité de combustion (11) du moteur à gaz (1), dans lequel le moteur à gaz (1) comprend un système de recirculation des gaz d'échappement (2) au moyen duquel un gaz d'échappement de l'unité de combustion (11) peut être acheminé au niveau d'une région de mélange de gaz d'échappement (18) au gaz acheminé à l'unité de combustion (11), dans lequel au moins un dispositif de mesure (22, 27) est disposé dans la tubulure d'admission (25) en amont de l'unité de combustion (11) et en aval de la région de mélange de gaz d'échappement (18), dispositif de mesure au moyen duquel le débit massique de gaz et la température de gaz sont déterminés, **caractérisé en ce qu'**en plus du dispositif de mesure (22, 27), au moins un capteur de température (29, 31) est disposé respectivement en amont de la région de mélange de gaz d'échappement (18) à la fois dans le système de recirculation des gaz d'échappement (2) et dans la tubulure d'admission (25),

en ce qu'un appareil de commande (21) est prévu, au moyen duquel le débit massique de gaz d'échappement recirculé (14) et le débit massique d'air (3) acheminé à l'unité de combustion (11) sont calculés à partir des grandeurs déterminées au moyen du dispositif de mesure (22, 27) et des capteurs de température (29, 31) et à partir du rapport d'air de combustion ($\lambda$) préréglé fixement et/ou mesuré au moyen d'une sonde lambda (24), et

en ce que, lors du calcul, un bilan de débit massique et un bilan énergétique sont effectués dans la zone de la région de mélange de gaz d'échappement (18), le débit massique de gaz d'échappement (14) du système de recirculation de gaz d'échappement (2), le débit massique de gaz dans la tubulure d'admission (25) en amont de la région de mélange de gaz d'échappement (18) et le débit massique de gaz dans la tubulure d'admission (25) en aval de la région de mélange de gaz d'échappement (18) et en amont de l'unité de combustion (11) sont pris en compte lors du bilan de débit massique et du bilan énergétique, et

en ce que le débit massique de gaz dans la tubulure d'admission (25) en amont de la région de mélange de gaz d'échappement (18) est un mélange d'air et de gaz de combustion présentant un rapport d'air de combustion ($\lambda$)

défini, et lors du calcul, le débit massique de gaz de combustion acheminé (9) étant exprimé par le biais du rapport d'air de combustion ($\lambda$) en fonction du débit massique d'air acheminé (3).

9. Procédé selon la revendication 8, **caractérisé en ce que**, pour la détermination du débit massique de gaz, en particulier du débit massique de gaz de combustion/air/gaz d'échappement, en amont de l'unité de combustion (11) et en aval de la région de mélange de gaz d'échappement (18), la pression de gaz, en particulier la pression de gaz de combustion/air/gaz d'échappement, est mesurée dans la tubulure d'admission (25) en amont de l'unité de combustion (11) et en aval de la région de mélange de gaz d'échappement (18), et au moyen du dispositif de mesure et de commande (21, 22, 27, 29, 31), à partir de la pression de gaz mesurée, en particulier de la pression de gaz de combustion/air/gaz d'échappement, de la température mesurée au moyen du dispositif de mesure et de commande (21, 27, 29, 31) et du régime du moteur à gaz (1), le débit massique de gaz, en particulier le débit massique de gaz de combustion/air/gaz d'échappement étant calculé.

10. Procédé selon la revendication 8 ou 9, **caractérisé en ce qu'**un dispositif de mesure (20, 19) est prévu, au moyen duquel le débit massique de gaz d'échappement recirculé (14) et/ou le débit massique d'air (3) acheminé à l'unité de combustion (11) sont déterminés alternativement en plus et/ou en fonction du fonctionnement du moteur à gaz (1), la détermination alternative et/ou supplémentaire du débit massique de gaz d'échappement recirculé (14) et/ou du débit massique d'air acheminé (3) s'effectuant de préférence au moyen d'un modèle de refroidisseur d'air de suralimentation réalisé sur un appareil de commande (21) et/ou d'un modèle de clapet d'étranglement réalisé sur un appareil de commande (21).

11. Procédé selon la revendication 10, **caractérisé en ce que** lors de la régulation et/ou de la commande du débit massique de gaz d'échappement recirculé (14) et/ou du débit massique d'air (3) acheminé à l'unité de combustion (11) en fonction d'états de fonctionnement définis du moteur à gaz (1), le débit massique de gaz d'échappement (14) recirculé déterminé alternativement et/ou en plus et/ou le débit massique d'air (3) déterminé alternativement et/ou en plus sont utilisés ou non.

12. Véhicule, en particulier véhicule utilitaire, comprenant un moteur à gaz selon l'une des revendications 1 à 7 et/ou pour la mise en oeuvre d'un procédé selon l'une des revendications 8 à 11.

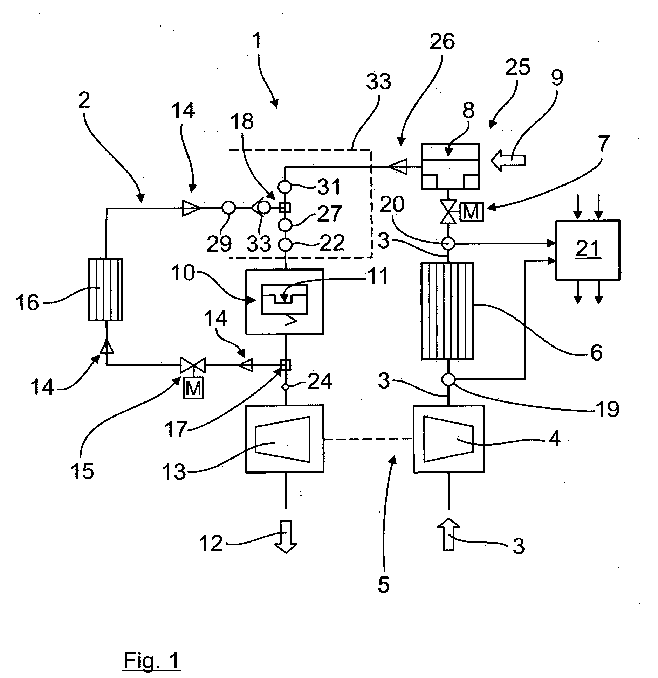

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2892150 A1
- US 2007227139 A1
- WO 2013175779 A1
- US 20090076713 A1
- WO 2014010361 A1
- WO 0159536 A1